# EUROPÄISCHE PATENTSCHRIFT

(11) **EP 3 503 776 B1**
(45) Veröffentlichungstag und Bekanntmachung des Hinweises auf die Patenterteilung: **06.10.2021**
(21) Anmeldenummer: 17748475.5
(22) Anmeldetag: 03.08.2017
(51) Int. Cl.: A47J 43/07, A47J 43/042

(54) **MESSERHALTEFUSS ZUR LEICHTEN BEFESTIGUNG**
BLADE-RETAINING FOOT FOR EASY FASTENING
PIED PORTE-LAME À FIXATION SIMPLE

(30) Priorität: 26.08.2016 DE 102016216097
(43) Veröffentlichungstag der Anmeldung: 03.07.2019
(73) Patentinhaber: BSH Hausgeräte GmbH, 81739 München (DE)
(72) Erfinder: STERGAR, David, 3342 Gornji (Grad) (SI); KOREN, Peter, 3331 Nazarje (SI); JEGRISNIK, Uros, 3313 Polzela (SI)
(86) Internationale Anmeldenummer: PCT/EP2017/069610
(87) Internationale Veröffentlichungsnummer: WO 2018/036772

(56) Entgegenhaltungen:
- WO-A1-2016/077424
- US-A- 4 087 053
- US-A1- 2009 309 310

## Beschreibung

Die vorliegende Erfindung betrifft einen Messerhaltefuß für eine Küchengerätekomponente, eine Küchengerätekomponente mit einem Messerhaltefuß und ein Küchengerät mit einer Küchengerätekomponente.

Elektromotorische Küchengeräte wie beispielsweise eine Küchenmaschine oder ein Standmixer umfassen häufig eine lösbare Küchengerätekomponente, die ein Gefäß ausbildet, in dessen Innerem eine Messeranordnung mit einem oder mehreren rotierbaren Messern zum Bearbeiten, beispielsweise Zerschnitzeln, Zerhacken, Mahlen, und/oder Verrühren von Lebensmitteln angeordnet ist. Das Gefäß weist dabei in der Regel einen Becher auf, an dem ein die Messereinrichtung umfassender Messerhaltefuß lösbar befestigt werden kann; ein Innenraum des Bechers wird dabei bodenseitig durch einen Teil des Messerhaltefußes abgeschlossen. Insbesondere kann der Becher einen Boden mit einer Öffnung aufweisen, durch die die Messereinrichtung ins Becherinnere hineinragt, oder der Becher kann selbst ohne Boden ausgebildet sein, so dass ein Boden des Gefäßes erst durch eine Oberfläche des Messerhaltefußes ausgebildet wird.

Die Verbindung von Messerhaltefuß und Becher wird im Allgemeinen durch eine Dichtung abgedichtet, die zwischen dem Becher und dem Messerhaltefuß angeordnet ist. Beim An- und Abdrehen des Messerhaltefußes an den bzw. vom Becher reibt dieser an dem relativ weichen Dichtmaterial, so dass ein starker Reibungswiderstand auftritt und die Verbindung somit schwer gängig ist.

Die Schrift WO-A-2016/077424 offenbart einen Messerhaltefuß nach dem Oberbegriff des unabhängigen Anspruchs 1.

Die vorliegende Erfindung hat daher die Aufgabe, eine Technik bereitzustellen, die ein erleichtertes Befestigen bzw. Lösen eines Bechers an einem bzw. von einem Messerhaltefuß ermöglicht.

Die Aufgabe wird gelöst von einem Messerhaltefuß gemäß Anspruch 1, einer Küchengerätekomponente gemäß Anspruch 7 und einem Küchengerät gemäß Anspruch 8. Vorteilhafte Ausführungsformen sind in den Unteransprüchen, der Beschreibung und den Figuren offenbart.

Ein erfindungsgemäßer Messerhaltefuß für eine Küchengerätekomponente umfasst ein erstes Teil und ein mit dem ersten Teil verdrehbar verbundenes zweites Teil. Das zweite Teil ist dazu eingerichtet ist, in einer Drehbewegung lösbar mit einem Becher der Küchengerätekomponente verbunden zu werden und das erste Teil (beispielsweise in einem ringartigen Randbereich desselben) sowie einen (geeigneten) Dichtring zwischen sich und dem Becher einzuklemmen.

Eine erfindungsgemäße Küchengerätekomponente umfasst einen Becher und einen lösbar mit dem Becher zu verbindenden Messerhaltefuß gemäß einer der in dieser Schrift offenbarten Ausführungsformen. Die Küchengerätekomponente kann insbesondere eine Aufsetzkomponente für eine Küchenmaschine oder für einen Standmixer sein. Der Becher kann beispielsweise mindestens teilweise aus Glas und/oder Kunststoff bestehen.

Ein erfindungsgemäßes Küchengerät hat einen Elektromotor und umfasst eine erfindungsgemäße Küchengerätekomponente sowie einen Adaptersockel, mit dem der Messerhaltefuß der Küchengerätekomponente an den Elektromotor angeschlossen werden kann. Das Küchengerät kann beispielsweise eine Küchenmaschine oder ein Standmixer sein.

Die vorliegende Erfindung ermöglicht somit ein Befestigen des Messerhaltefußes am Becher, bei dem das zweite Teil gegenüber dem Becher verdreht wird, während das erste Teil ― aufgrund des Reibungswiderstandes zwischen Dichtring und Becher einerseits und der Verdrehbarkeit von erstem und zweitem Teil andererseits ― nicht oder zumindest nur unwesentlich relativ zum Becher gedreht wird: Es werden bei der Verbindung vielmehr erstes und zweites Teil gegeneinander verdreht, was mit nur geringem Reibungswiderstand möglich ist; der Dichtring wird dabei im Wesentlichen nur zusammengepresst, insbesondere wird eine Reibung am Dichtring (durch den Becher und/oder durch den Messerhaltefuß) vermieden. Auf diese Weise kann der Messerhaltefuß leicht an dem Becher befestigt werden; Analoges gilt für das Ablösen des Messerhaltefußes vom Becher.

Die Verbindung von zweitem Teil und Becher kann unmittelbar (also in direktem Kontakt von zweitem Teil und Becher) oder über mindestens ein Zwischenelement erfolgen. Insbesondere kann das zweite Teil an einem Halterungskranz zu befestigen sein, der seinerseits mit dem Becher verbunden bzw. zu verbinden ist (z.B. mittels einer Verschraubung oder eines Bajonettanschlusses): Der Halterungskranz kann dabei eine Klammerung ausbilden, die auf der einen Seite den Becher auf den Dichtring (und das vorzugsweise daran anliegende erste Teil) drückt und auf der anderen Seite das eingedrehte zweite Teil gegen das erste Teil zieht.

Das erste Teil kann eine Oberfläche aufweisen, die dazu eingerichtet ist, (im an den Becher montierten Zustand des Messerhaltefußes) einen Innenraum des Bechers (also einem Raum, in dem ein Lebensmittel bestimmungsgemäß zu bearbeiten ist) bodenseitig mindestens teilweise abzuschließen. Insbesondere umfasst der Begriff "Becher" in dieser Schrift auch eine rohrartige (vorzugsweise einen Henkel umfassende) Wandung eines Gefäßes, das erst bei Befestigung des Messerhaltefußes einen Boden erhält. Die Oberfläche des ersten Teils kann dabei erfindungsgemäß in einer linearen Bewegung eingesteckt und vermöge der Drehbewegung des zweiten Teils fixiert werden.

Vorzugsweise ist das zweite Teil dazu eingerichtet, im mit dem Becher verbundenen Zustand von dem/einem Innenraum des Bechers beabstandet zu sein; insbesondere wird der Innenraum somit nicht durch eine Oberfläche des zweiten Teils begrenzt. Diese Ausführungsform ermöglicht einen Verzicht auf eine Dichtung zwischen Becher und zweitem Teil, das damit reibungsarm gegenüber dem Becher zu verdrehen ist.

Das zweite Teil kann ein Gewinde umfassen, das dazu eingerichtet ist, zur Verbindung mit dem Becher mit einem Gegengewinde zusammenzuwirken, das am Becher oder an einem Zwischenelement (beispielsweise einem am Becher befestigten oder zu befestigenden Halterungskranz wie oben erwähnt) angeordnet sein kann. Alternativ oder zusätzlich kann das zweite Teil beispielsweise mindestens ein Bajonettanschlusselement umfassen, das dazu eingerichtet ist, zur Verbindung mit dem Becher in Gegenelemente am Becher oder an einem Zwischenelement (z.B. einem am Becher befestigten Halterungskranz) eingedreht zu werden. In Ausführungsbeispielen, bei denen die Verbindung von zweitem Teil und Becher über mindestens ein Zwischenelement (beispielsweise einen Halterungskranz) erfolgt, kann dieses auf die gleiche oder eine andere Weise (z.B. mit Gewinde oder Bajonettanschluss) am Becher oder an einem weiteren Zwischenelement befestigt oder zu befestigen sein wie das zweite Teil am Zwischenelement.

Erstes und/oder zweites Teil können vorzugsweise ganz oder teilweise aus Metall und/oder Kunststoff bestehen: Metall als Material bietet den Vorteil einer besonderen Robustheit und Abriebfestigkeit, Kunststoff als Material ermöglicht insbesondere ein geringes Gewicht und eine leichte Herstellbarkeit.

Gemäß der Erfindung bildet das erste Teil eine Auflage für den Dichtring aus, auf der angeordnet der Dichtring kontaktfrei zum zweiten Teil zwischen erstem Teil und Becher (also zusammen mit dem ersten Teil zwischen zweitem Teil und Becher) einzuklemmen ist: Aufgrund des nicht vorhandenen Kontakts zwischen zweitem Teil und Dichtring ist der Reibungswiderstand beim Befestigen eines derartigen Messerhaltefußes an einem Becher bei dieser Ausführungsform besonders gering.

Gemäß einer vorteilhaften Ausführungsform eines erfindungsgemäßen Messerhaltefußes sind das erste und das zweite Teil formschlüssig verdrehbar aneinander verrastet. Die beiden Teile können beispielsweise einander zugewandte Rippen aufweisen, die ineinander verhakt sind. Gemäß einem speziellen Ausführungsbeispiel weist das erste Teil einen im Wesentlichen hohlzylinderartig geformten Abschnitt mit einer nach innen kranzartig hervorstehenden Rippe auf. Das zweite Teil umfasst dabei einen und oder mehrere Abschnitt/e mit einer Oberfläche, die im Wesentlichen entlang der inneren Oberfläche des hohlzylinderartig geformten ersten Teils verläuft und die (z.B. an ihrem Rand) mindestens eine nach außen hervorragende Erhebung (beispielsweise eine weitere Rippe) umfasst; die Rippe am ersten Teil und die Erhebung(en) am zweiten Teil sind dabei ineinander verhakt. Vorzugsweise ist der oder sind die Abschnitt/e des zweiten Teils federnd ausgebildet, so dass die Erhebung(en) zur Verrastung von erstem und zweitem Teil mit Rippe am ersten Teil einschnappt/einschnappen. Analog kann umgekehrt das zweite Teil einen im Wesentlichen hohlzylinderartig geformten Abschnitt mit Rippe nach innen und das erste einen oder mehrere entsprechende (federnde) Abschnitt/e mit Erhebung(en) nach außen aufweisen, wobei Rippe und Erhebung(en) ineinander verhakt sind.

Eine derartige Verbindung ist einfach herzustellen und ermöglicht einen reibungsarmen Drehkontakt der beiden Teile und damit ein einfaches Befestigen und Ablösen des Messerhaltefußes am Becher.

Gemäß einer vorteilhaften Ausführungsform weist das zweite Teil Griffmulden auf; damit kann es besonders einfach von einem Verwender gegenüber dem Becher verdreht werden.

Ein erfindungsgemäßer Messerhaltefuß kann den Dichtring, einen Halterungskranz wie oben beschrieben und/oder eine rotierbare Messereinrichtung umfassen. Eine derartige Messereinrichtung kann einen oder mehrere Messerflügel aufweisen. Gemäß einer vorteilhaften Ausführungsform weist ein Messerhaltefuß ein Kupplungselement zum Anschluss an einen Elektromotor eines Küchengeräts auf. Das Kupplungselement kann von erstem und/oder zweitem Teil mindestens teilweise umrandet, beispielsweise in einen Hohlraum eingefasst sein, den mindestens ein Abschnitt des ersten und/oder mindestens ein Abschnitt des zweiten Teils zylinderartig umgeben.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: einen erfindungsgemäßen Messerhaltefuß gemäß einer exemplarischen Ausführungsform in einem Längsschnitt; und
- Figur 2:: ein Küchengerät gemäß einem Ausführungsbeispiel der vorliegenden Erfindung im Längsschnitt.

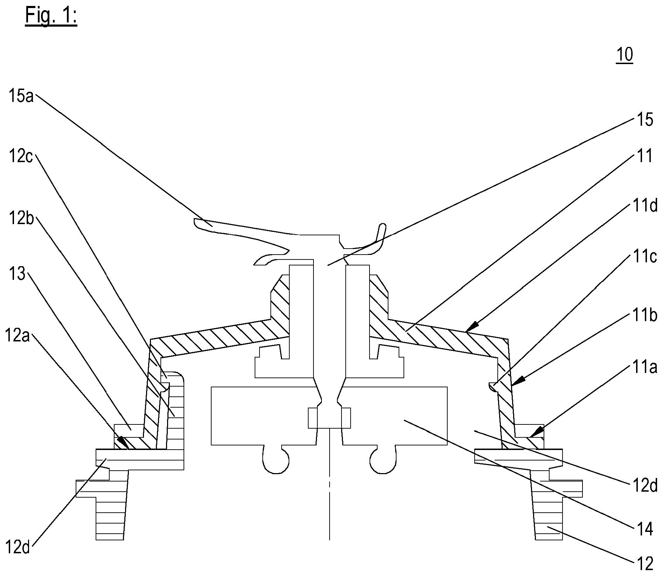

In Figur 1 ist ein Längsschnitt in axialer Richtung durch einen erfindungsgemäßen Messerhaltefuß 10 für eine Küchengerätekomponente (in einer Ausrichtung gemäß einer bestimmungsgemäßen Verwendung) dargestellt. Der Messerhaltefuß 10 umfasst im gezeigten Beispiel ein erstes Teil 11, ein zweites Teil 12, einen Dichtring 13, ein Kupplungselement 14 und eine mit dem Kupplungselement 14 verbundene rotierbare Messereinrichtung 15 mit Messern 15a.

Der Messerhaltefuß ist dazu eingerichtet, auf einen Adaptersockel eines zugehörigen (in der Figur 1 nicht dargestellten) Küchengeräts aufgesetzt zu werden. So kann die Messereinrichtung 15 über die Kupplung 14 an einen Elektromotor (bzw. ein elektromotorisches Getriebe) angeschlossen und damit in bestimmungsgemäßem Betrieb rotiert werden.

Das zweite Teil 12 bildet eine ringartige Auflagefläche 12a für das erste Teil aus, und das erste Teil 11 des Messerhaltefußes 10 bildet eine ringartige Auflage 11a für den Dichtring 13 aus; auf dieser Auflage 11a ist der Dichtring 13 kontaktfrei zum zweiten Teil 12 angeordnet.

Das erste Teil 11 weist einen im Wesentlichen hohlzylinderartig geformten Abschnitt 11b mit einer nach innen kranzartig hervorstehenden ersten Rippe 11c auf. Innerhalb des Abschnitts 11b sind mehrere Abschnitte 12b des zweiten Teils 12 angeordnet, die im Wesentlichen entlang der Zylinderoberfläche des Abschnitts 11b verlaufen. Die Abschnitte 12b sind durch Zwischenräume 12d voneinander getrennt; von den Abschnitten und den Zwischenräumen ist aufgrund der Schnittdarstellung jeweils nur einer in der Figur 1 zu sehen. An den Abschnitten 12b sind jeweils der Rippe 11c zugewandt und mit dieser verhakt Erhebungen 12c angeordnet, die im vorliegenden Beispiel als weitere Rippen ausgebildet sind.

Infolge der Trennung der Abschnitte 12b durch die Zwischenräume 12d (sowie aufgrund eines geeigneten Materials, beispielsweise Metall oder Kunststoff) sind die Abschnitte 12b nachgiebig genug, um bei einem Zusammensetzen von erstem und zweitem Teil federnd nach innen nachzugeben und so ein formschlüssiges Verrasten der Rippen 11c und 12c ineinander zu ermöglichen.

Das erste und das zweite Teil sind somit durch die Auflage des ersten Teils 11 auf der Auflagefläche 12a einerseits und die Verhakung der Rippen 11c und 12c andererseits miteinander verbunden. Diese Verbindung erlaubt dabei eine Verdrehung der beiden Teile gegeneinander (also relativ zueinander).

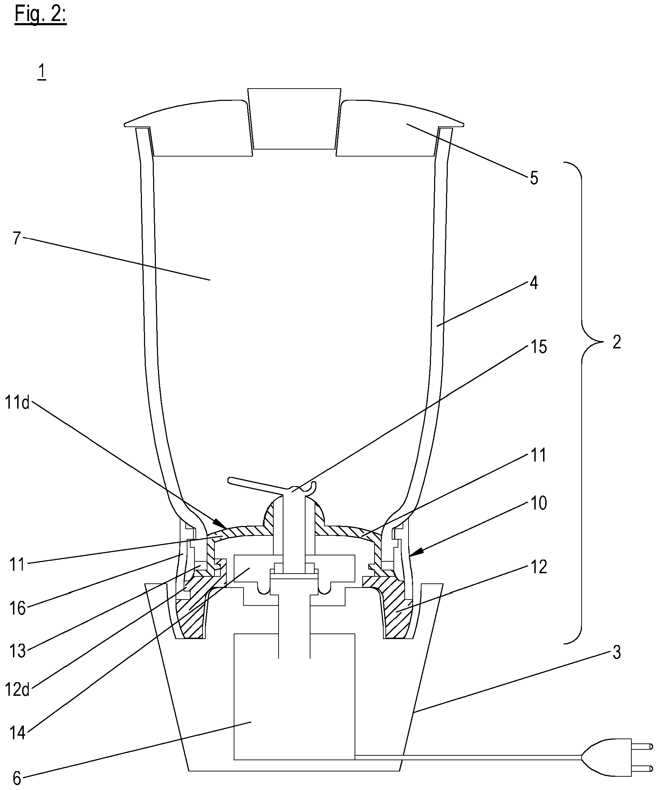

Der Messerhaltefuß 10 kann lösbar mit einem (in der Figur 1 nicht gezeigten) Becher einer Küchengerätekomponente verbunden werden; eine derartige Verbindung ist in der Figur 2 gezeigt und weiter unten beschrieben. Zum Verbinden kann ein Rand des Bechers auf den Dichtring 13 aufgesetzt werden.

Im mit dem Becher verbundenen Zustand schließt eine Oberfläche 11d einen Innenraum des Bechers bodenseitig ab. Das zweite Teil 12 hingegen ist an der Bildung des Innenraums nicht beteiligt, begrenzt ihn also nicht; vielmehr ist es vom Innenraum beabstandet. Über einen nicht dargestellten Halterungskranz kann das zweite Teil 12 mit dem Becher verbunden werden. So kann das zweite Teil 12 das erste Teil 11 und den Dichtring 13 zwischen sich und dem Becher einklemmen.

Zur Verbindung mit einem derartigen Halterungskranz weist das zweite Teil im gezeigten Ausführungsbeispiel Bajonettanschlusselemente 12d auf, von denen in der Figur 1 aufgrund der Schnittdarstellung wiederum nur eines sichtbar ist und die in entsprechende Elemente am Halterungskranz eingedreht werden können. Da das zweite Teil 12 den Dichtring nicht berührt und da das erste und das zweite Teil relativ zueinander verdrehbar sind, tritt bei dieser Drehbewegung zur Verbindung mit dem Becher keine Reibung am Dichtring auf; vielmehr werden erstes und zweites Teil gegeneinander verdreht. Da diese beiden Teile aus einem härteren Material gebildet sind als der Dichtring (nämlich beispielsweise aus Metall und/oder Kunststoff), ist der bei der Drehung auftretende Reibungswiderstand vorteilhaft gering.

In Figur 2 ist ein Längsschnitt durch ein exemplarisches Küchengerät 1 gemäß einer Ausführungsform der vorliegenden Erfindung vereinfacht dargestellt; beim gezeigten Beispiel handelt es sich um einen Standmixer, der einen Sockel 3 und eine Mixerkomponente 2 umfasst, die als erfindungsgemäße Küchengerätekomponente ausgebildet ist.

Die Mixerkomponente 2 umfasst einen Becher 4 mit einem Deckel 5 sowie einen vom Behälter ablösbaren, erfindungsgemäßen Messerhaltefuß 10, der vorliegend auf den Sockel 3 aufgesetzt ist und der ein erstes Teil 11, ein zweites Teil 12, eine rotierbare Messereinrichtung 15 und eine Kupplung 14 umfasst, über welche die Messereinrichtung 15 an den Elektromotor 6 des Küchengeräts angeschlossen ist.

Der Messerhaltefuß umfasst weiterhin einen Halterungskranz 16, der am Becher mittels eines Bajonettanschlusses befestigt ist; alternativ könnte eine derartige Befestigung beispielsweise durch ineinandergreifende Gewinde an Halterungskranz und Becher erfolgen.

Am Halterungskranz 16 ist das zweite Teil 12 des Messerhaltefußes eingedreht und im vorliegenden Beispiel ebenfalls mittels eines Bajonettanschlusses (durch Verhakung der Bajonettanschlusselemente 12d am zweiten Teil 12 in geeignete Gegenelemente am Halterungskranz) befestigt. Dadurch sind die Dichtung 13 und das erste Teil 11 zwischen dem Becher 4 und dem zweiten Teil 12 eingeklemmt und der Innenraum 7 des Bechers 4, der bodenseitig von der Oberfläche 11d abgeschlossen ist, abgedichtet. Das zweite Teil 12 ist dabei vom Innenraum 7 beabstandet, grenzt also nicht an den Innenraum an.

Ein erfindungsgemäßer Messerhaltefuß umfasst ein erstes Teil 11 und ein zweites Teil 12, die verdrehbar miteinander verbunden sind. Das zweite Teil 12 ist dazu eingerichtet, mittels einer Drehbewegung lösbar an einem Becher 4 einer Küchengerätekomponente verbunden zu werden und dabei das erste Teil 11 und einen Dichtring 13 zwischen sich und dem Becher 4 einzuklemmen.

Eine erfindungsgemäße Küchengerätekomponente umfasst einen Becher 4 und einen lösbar mit dem Becher zu verbindenden erfindungsgemäßen Messerhaltefuß 10. Ein erfindungsgemäßes Küchengerät 1 umfasst einen Elektromotor 6, eine erfindungsgemäße Küchengerätekomponente 2 und einen Adaptersockel zum Anschließen des Messerhaltefußes 10 der Küchengerätekomponente 2 an den Elektromotor.

### Bezugszeichen

- 1: Küchengerät
- 2: Küchengerätekomponente
- 3: Sockel
- 4: Becher
- 5: Deckel
- 6: Elektromotor
- 7: Innenraum des Bechers

- 10: Messerhaltefuß

- 11: erstes Teil
- 11a: Auflage für den Dichtring
- 11b: zylinderartig geformter Abschnitt des ersten Teils
- 11c: Rippe
- 11d: Oberfläche des ersten Teils
- 12: zweites Teil

- 12a: Auflagefläche für den ersten Teil
- 12b: Abschnitte des zweiten Teils
- 12c: Erhebung
- 12d: Zwischenraum

- 13: Dichtring
- 14: Kupplung
- 15: Messereinrichtung
- 15a: Messer
- 16: Halterungskranz

## Patentansprüche

1. Messerhaltefuß (10) für eine Küchengerätekomponente, wobei der Messerhaltefuß ein erstes Teil (11) und ein mit dem ersten Teil verdrehbar verbundenes zweites Teil (12) umfasst, wobei das zweite Teil (12) dazu eingerichtet ist, in einer Drehbewegung lösbar mit einem Becher der Küchengerätekomponente verbunden zu werden und dabei das erste Teil (11) und einen Dichtring (13) zwischen sich und dem Becher einzuklemmen,
wobei das erste Teil eine Auflage (11a) für den Dichtring (13) ausbildet,
**dadurch gekennzeichnet, dass** der auf der Auflage (11a) angeordnete Dichtring (13) kontaktfrei zum zweiten Teil (12) zwischen erstem Teil und Becher einzuklemmen ist.

2. Messerhaltefuß gemäß Anspruch 1, wobei das erste und/oder das zweite Teil vollständig oder teilweise aus Metall und/oder Kunststoff bestehen/besteht.

3. Messerhaltefuß gemäß einem der vorhergehenden Ansprüche, wobei das erste Teil (11) eine Oberfläche (11d) aufweist, die dazu eingerichtet ist, einen Innenraum des Bechers bodenseitig mindestens teilweise abzuschließen.

4. Messerhaltefuß gemäß einem der vorhergehenden Ansprüche, wobei das zweite Teil (12) dazu eingerichtet ist, im mit dem Becher verbundenen Zustand vom Innenraum (7) des Bechers beabstandet zu sein.

5. Messerhaltefuß gemäß einem der vorhergehenden Ansprüche, wobei das erste Teil (11) und das zweite Teil (12) formschlüssig verdrehbar aneinander verrastet sind.

6. Messerhaltefuß gemäß einem der vorhergehenden Ansprüche, der den Dichtring (13), eine rotierbare Messereinrichtung (15), einen Halterungskranz (16) und/oder mindestens ein Kupplungselement (14) zum Anschluss an einen Elektromotor eines Küchengeräts umfasst.

7. Küchengerätekomponente (2), die einen Becher (4) und einen lösbar mit dem Becher zu verbindenden Messerhaltefuß (10) gemäß einem der vorhergehenden Ansprüche umfasst.

8. Küchengerät (1) mit einem Elektromotor (6), einer Küchengerätekomponente (2) gemäß Anspruch 7 und einem Adaptersockel (3) zum Anschließen des Messerhaltefußes an den Elektromotor.

## Claims

1. Blade-retaining foot (10) for a kitchen appliance component, wherein the blade-retaining foot comprises a first part (11) and a second part (12) connected rotatably with the first part, wherein the second part (12) is designed to be detachably connected to a beaker of the kitchen appliance component in a rotational movement and in the process to clamp the first part (11) and a sealing ring (13) between itself and the beaker,
wherein the first part embodies a support (11a) for the sealing ring (13), **characterised in that** the sealing ring (13) arranged on the support (11a) is to be clamped between the first part and the beaker without contact with the second part (12).

2. Blade-retaining foot according to claim 1, wherein the first and/or the second part consist/consists entirely or partially of metal and/or plastic.

3. Blade-retaining foot according to one of the preceding claims, wherein the first part (11) has a surface (11d), which is designed to close an interior of the beaker at least partially on the bottom.

4. Blade-retaining foot according to one of the preceding claims, wherein the second part (12) is designed to be at a distance from the interior (7) of the beaker when connected to the beaker.

5. Blade-retaining foot according to one of the preceding claims, wherein the first part (11) and the second part (12) are rotatably latched to one another in a form-fit manner.

6. Blade-retaining foot according to one of the preceding claims, which comprises the sealing ring (13), a rotatable blade device (15), a mounting flange (16) and/or at least one coupling element (14) for connection to an electric motor of a kitchen appliance.

7. Kitchen appliance component (2) which comprises a beaker (4) and a blade-retaining foot (10) to be connected detachably with the beaker according to one of the preceding claims.

8. Kitchen appliance (1) with an electric motor (6), of a kitchen appliance component (2) according to claim 7 and an adapter socket (3) for connecting the blade-retaining foot to the electric motor.

## Revendications

1. Pied porte-lame (10) pour un composant d'appareil de cuisine, dans lequel le pied porte-lame comprend une première partie (11) et une deuxième partie (12) raccordée à rotation à la première partie, la deuxième partie (12) étant prévue pour être raccordée de manière amovible dans un mouvement de rotation avec un godet du composant d'appareil de cuisine et enserrer ainsi la première partie (11) ainsi qu'une bague d'étanchéité (13) entre elle-même et le godet,
la première partie formant une surface d'appui (11a) pour la bague d'étanchéité (13), **caractérisé en ce que** la bague d'étanchéité (13) disposée sur la surface d'appui (11a) est à enserrer sans contact avec la deuxième partie (12) entre la première partie et le godet.

2. Pied porte-lame selon la revendication 1, dans lequel la première et/ou la deuxième partie est/sont entièrement ou partiellement constituée/s de métal et/ou de matière synthétique.

3. Pied porte-lame selon l'une des revendications précédentes, dans lequel la première partie (11) comprend une surface (11d) prévue pour fermer au moins partiellement côté plancher un espace intérieur du godet.

4. Pied porte-lame selon l'une des revendications précédentes, dans lequel la deuxième partie (12) est prévue pour être à l'état raccordé du godet, écartée de l'espace intérieur (7) du godet.

5. Pied porte-lame selon l'une des revendications précédentes, dans lequel la première partie (11) et la deuxième partie (12) s'encliquètent l'une à l'autre par emboîtement rotatif.

6. Pied porte-lame selon l'une des revendications précédentes, lequel comprend la bague d'étanchéité (13), un dispositif de lame rotatif (15), une couronne de support (16) et/ou au moins un élément de couplage (14), pour le raccordement au moteur électrique d'un appareil de cuisine.

7. Composant d'appareil de cuisine (2), lequel comprend un godet (4) et un pied porte-lame (10) selon l'une des revendications précédentes à raccorder de manière amovible avec le godet.

8. Appareil de cuisine (1) comprenant un moteur électrique (6), un composant d'appareil de cuisine (2) selon la revendication 7 et un socle adaptateur (3) pour le raccordement du pied porte-lame au moteur électrique.
